# EUROPEAN PATENT APPLICATION

(11) **EP 2 597 390 A2**
(43) Date of publication of application: **29.05.2013**
(21) Application number: 12193204.0
(22) Date of filing: 19.11.2012
(51) Int. Cl.: F24F 11/00

(54) **Air conditioner and method of controlling an air conditioner**

(30) Priority: 28.11.2011 KR 20110124905
(71) Applicant: LG ELECTRONICS INC., Youngdungpo-gu Seoul 150-721 (KR); Industry-Academic Cooperation Foundation Dankook University, Yongin-si, Gyeonggi-do 448-701 (KR)
(72) Inventor: Jang, Jaesoo, 153-802 Seoul (KR); Park, Dongryul, 153-802 Seoul (KR); Sung, Bongjo, 153-802 Seoul (KR); Moon, Hyeunjun, 153-802 Seoul (KR)
(74) Representative: Vossius & Partner

(57) **Abstract**

An air conditioner is disclosed, comprising a temperature sensor that senses a temperature of indoor air, a humidity sensor that senses a humidity of the indoor air, and a controller that uses the sensed temperature and humidity to calculate an indoor standard new effective temperature and an indoor relative humidity, and perform a comfort control operation based upon a result of the calculation.

## Description

### BACKGROUND

### 1. Field

An air conditioner and a method of controlling an air conditioner are disclosed herein.

### 2. Background

Air conditioners are known. However, they suffer from various disadvantages.
The object of the present invention is to provide an air conditioner and a method of operating an air conditioner which provides improved characteristics.
This object is solved with the features of the claims.

### BRIEF DESCRIPTION OF THE DRAWINGS

Embodiments will be described in detail with reference to the following drawings in which like reference numerals refer to like elements, and wherein:

Fig. 1 is a front perspective view of an air conditioner according to an embodiment;

Fig. 2 is a block diagram of a control system of the air conditioner of Fig. 1;

Fig. 3A is a graph illustrating ranges of standard new effective temperature and relative humidity for determining a comfort range, according to an embodiment;

Figs. 3B-3C are graphs of experimental values obtained for both young people and old people;

Fig. 4 is a flowchart of a comfort control operation method according to an embodiment;

Fig. 5 is a schematic view illustrating a state of a comfort control operation on a display according to an embodiment;

Fig. 6 is a schematic view illustrating a state of a comfort control operation on a display according to an embodiment;

Fig. 7 is a schematic view illustrating a state of a comfort control operation on a display according to an embodiment; and

Fig. 8 is a flowchart of a method of selecting a screen displaying an operation state of an air conditioner, according to an embodiment.

### DETAILED DESCRIPTION

Reference will now be made in detail to embodiments, examples of which are illustrated in the accompanying drawings.

Air conditioners may include a cooling device that cools indoor air and supplies the air to an indoor space, and a heating device that heats indoor air and supplies the air to the indoor space, or may include a cooling/heating device having both a cooling function and a heating function. Air conditioners may perform a cooling or heating operation, such that an indoor temperature reaches a temperature set by a user. Alternatively, air conditioners may perform an automatic operation, such that an indoor space reaches a condition at which a user feels comfortable.

The condition at which the user feels comfortable may vary according to indoor temperature and humidity. In addition, temperature and humidity at which the user feels comfortable may vary according to the season.

A temperature sensor may be installed on or in an air conditioner to sense indoor temperature. Air conditioners may perform an automatic operation, such that an indoor temperature reaches a temperature set by a user, or reaches a temperature at which a user feels comfortable. However, when such air conditioners are operated, the humidity of indoor air is not considered. Thus, even when an indoor temperature reaches a comfort temperature, the humidity may not reach a comfort condition, so that a user may feel that the air conditioner does not function in a satisfactory manner. In addition, it should be considered that a user comfort condition may vary according to the season.

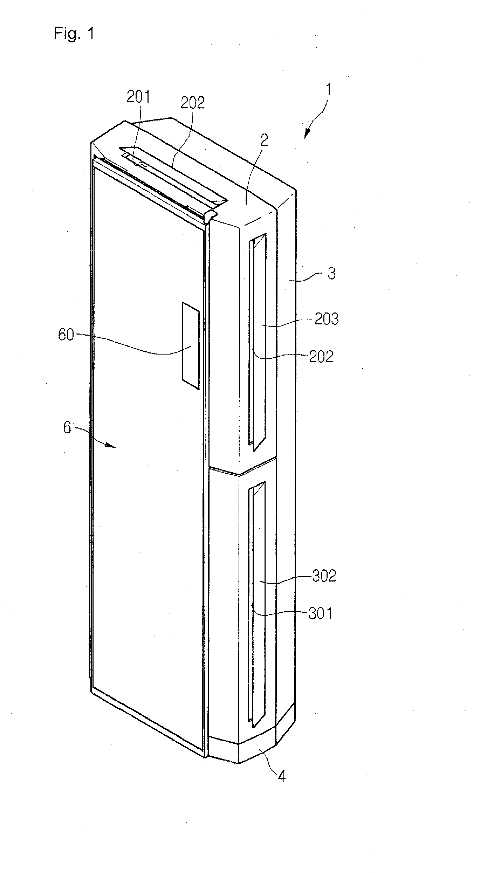

Fig. 1 is a front perspective view of an air conditioner according to an embodiment. Referring to Fig. 1, the air conditioner 1 may include a front frame 2 that forms a front thereof, a rear frame 3 that forms a rear thereof, and a base frame 4 that forms a base thereof. The frames 2, 3, and 4 may constitute a main body of the air conditioner 1.

A side lower surface of the front frame 2 may be provided with an intake port 301 that sucks in air from an installation space (i.e., indoor space), and an intake panel 302 that selectively closes the intake port 301. A plurality of each of the intake port 301 and the intake panel 302 may be provided, respectively, at both sides of the front frame 2.

A side upper surface of the front frame 2 may be provided with a side discharge port 202 that discharges air conditioned within the main body, and a side panel 203 that selectively closes the side discharge port 202. A plurality of each of the side discharge port 202 and the side panel 203 may be provided, respectively, at both sides of the front frame 2.

An upper end of the front frame 2 may be provided with an upper discharge port 201 that discharges air conditioned within the main body, and an upper panel 202 that selectively closes the upper discharge port 201. A front of the front frame 2 may be provided with a front panel 6, which may be rotatable. The front of the front panel 6 may be provided with a display 60 that displays operation states of the air conditioner 1.

A fan motor (not shown) may be disposed within the main body of the air conditioner 1 and may provide a suction force for forming an air flow. When the fan motor is driven, air introduced through the intake port 301 may be discharged to the indoor space through the fan motor, a heat exchanger (not shown), and the upper discharge port 201 or the side discharge port 202. While passing through the heat exchanger, the introduced air may be heated or cooled through heat exchange with refrigerant, and then, may be discharged to the indoor space through the upper discharge port 201 or the side discharge port 202.

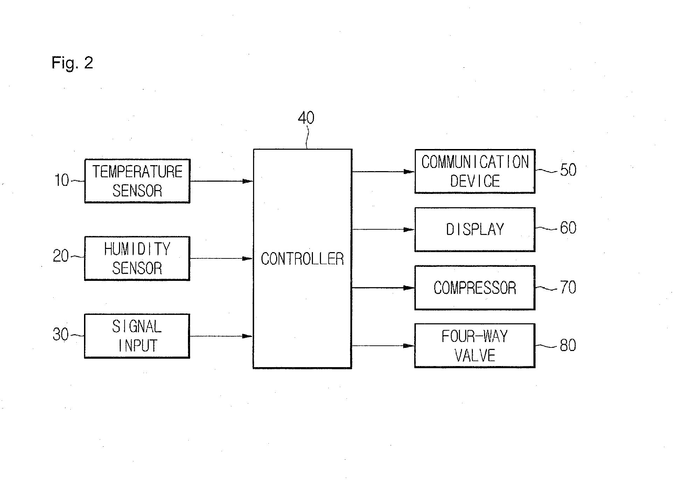

Fig. 2 is a block diagram of a control system of the air conditioner of Fig. 1. Referring to Fig. 2, the control system may include a temperature sensor 10 that senses a temperature of indoor air; a humidity sensor 20 that senses a humidity of the indoor air; a signal input 30 that receives a signal for operating the air conditioner 1; a controller 40 that controls the air conditioner 1 on the basis of the sensed temperature, the sensed humidity, and the received signal; a communication device 50 that transmits a signal to a humidifier (not shown) through the controller 40; a display 60; a compressor 70 that compresses the refrigerant from a vapor state at low temperature and low pressure to a vapor state at high temperature and high pressure, and discharges the refrigerant; and a four-way valve 80 that changes a direction of the refrigerant flowing within the air conditioner 1.

The temperature sensor 10 and the humidity sensor 20 may sense temperature and humidity of an indoor space, respectively. The temperature sensor 10 and the humidity sensor 20 may be disposed, for example, on an outer surface of the frame 2, 3, or 4. Thus, the temperature sensor 10 and the humidity sensor 20 may contact indoor air to sense indoor temperature and humidity, and then, transmit sensed values to the controller 40.

Alternatively, the temperature sensor 10 and the humidity sensor 20 may be disposed inside the intake port 301. In this case, the temperature sensor 10 and the humidity sensor 20 may contact indoor air introduced through the intake port 301. Because the temperature sensor 10 and the humidity sensor 20 contact flowing indoor air, the temperature sensor 10 and the humidity sensor 20 may quickly sense the temperature and humidity of the indoor air.

The signal input 30 may be disposed, for example, on an outer surface of the frame 2, 3, or 4. Alternatively, the signal input 30 may be disposed on the front panel 6. The signal input 30 may be a remote control device. In this case, the air conditioner 1 may include a signal receiver (not shown) to receive a signal from the remote control device.

A user may input an external input value for controlling the air conditioner 1, using the signal input 30. The external input value may be a signal for a cooling or heating operation. Alternatively, the external input value may be a desired indoor temperature value.

The controller 40 may control the air conditioner 1 according to the cooling or heating operation, and an indoor temperature value and an indoor humidity value input through the temperature sensor 10, the humidity sensor 20, and the signal input 30. The controller 40 may perform a comfort control operation to be described later.

The communication device 50 may transmit a signal from the controller 40 to a humidifier (not shown). Thus, during the comfort control operation, the humidifier may be turned on to humidify indoor air, and be turned off after the humidifying operation.

The display 60 may display an on/off state of the air conditioner 1, an indoor temperature value, and a desired temperature value. Further, a state according to the comfort control operation may be displayed.

The controller 40 may also control the compressor 70. That is, an on/off operation of the compressor 70 may be controlled. Further, a plurality of the compressor 70 may be provided, which may all be controlled by the controller 40. In such a case, when a load applied to the air conditioner 1 is small, the controller 40 may turn a portion of the compressors 70 off, and turn others of the compressors 70 on. When the air conditioner 1 includes an inverter compressor, a number of rotations of the inverter compressor may vary according to load.

The controller 40 may control the four-way valve 80 to perform the cooling or heating operation. That is, the refrigerant discharged from the compressor 70 may be guided to an outdoor heat exchanger (not shown) or an indoor heat exchanger (not shown), so that the air conditioner 1 may perform the cooling or heating operation.

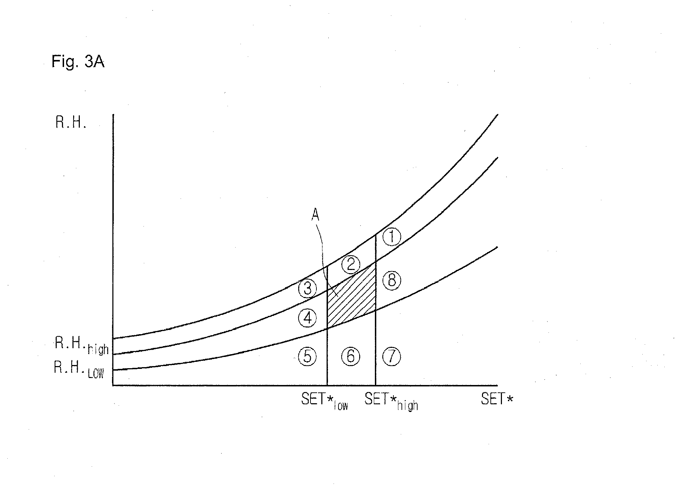

Fig. 3A is a graph illustrating ranges of standard new effective temperature and relative humidity for determining a comfort range, according to an embodiment. A standard new effective temperature (SET*) may be obtained by converting a new effective temperature (ET*) into a temperature in a windless standard environment with a relative humidity of 50% and an amount of clothing of 0.6 clo. The term clo denotes a unit of thermal insulation of clothing. Clothing functions as a thermal insulator for a human body, and help keep the skin at a constant temperature. Because the amount of heat loss from skin due to radiation, convection, and conduction significantly varies according to an amount of clothing, an exterior temperature for reaching thermal equilibrium also varies.

1 clo corresponds to a level of thermal insulation performance allowing a heat transfer of 1 kcal per hour through an area of 1 m² when a temperature difference between inner and outer surfaces of clothing is 0.18°C, and may be expressed by the equation of 1 clo = 0.155 m2°C/W. Thus, as clo increases, thermal insulation may be improved. A typical work wear has an amount of clothing of 1 clo.

The new effective temperature (ET*) may be adopted from the new standard temperature index in the handbook of the American Society of Heating, Refrigerating, and Air-Conditioning Engineers (ASHRAE). The new effective temperature (ET*) may be a thermal environmental index determined by indoor temperature corresponding to a relative humidity of 50% in a comfort diagram with respect to a windless condition, a seated position, and an amount of clothing of 0.6 clo. An asterisk is put beside the new effective temperature (ET*) to be discriminated from the effective temperature (ET).

If indoor temperature and humidity are determined, a new effective temperature and a standard new effective temperature may be calculated based on data provided by the American Society of Heating, Refrigerating, and Air-Conditioning Engineers. Thus, the process of calculating the new effective temperature and the standard new effective temperature will be omitted herein.

An upper limit and/or lower limit of relative humidity and standard new effective temperature for defining a comfort range A may be automatically determined by the controller 40. The range of the standard new effective temperature for determining the comfort range A may vary according to an operation mode input by a user.

For example, the comfort range A in a cooling mode (i.e. mode 1) may be defined by a standard new effective temperature ranging from about 25.8°C to about 27.5°C, and a relative humidity ranging from about 40% to about 55%. The comfort range A in a heating mode (i.e. mode 2) may be defined by a standard new effective temperature ranging from about 25.7 °C to about 26.8 °C, and a relative humidity ranging from about 40% to about 55%.

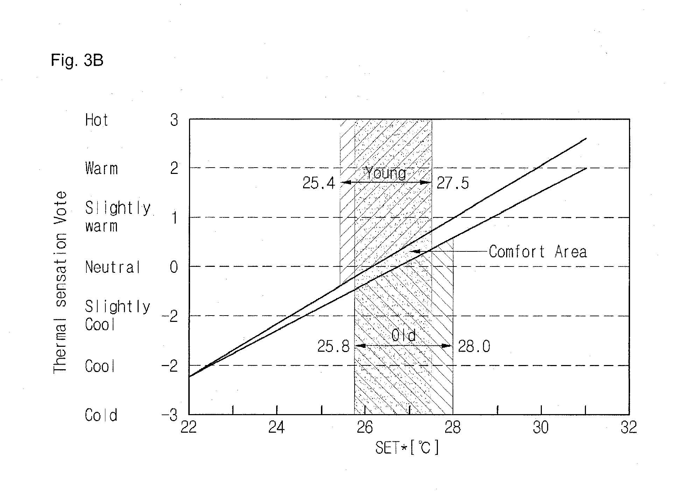

Referring to Figs. 3B-3C, the range of the standard new effective temperature defining the comfort range A in the cooling and heating modes is based on experimental values from both young people and old people. The average age of women among the young people was 20.3 with a standard deviation of ±1.2, and the average age of men among the young people was 21 with a standard deviation of ±2.8. The average age of the old people was 64.0 with a standard deviation of ±2.0.

The young people in the cooling mode, who were Koreans, felt comfortable at a standard new effective temperature ranging from about 25.4°C to about 27.5°C, and the old people in the cooling mode, who were Koreans, felt comfortable at a standard new effective temperature ranging from about 25.8°C to about 28.0°C. Thus, a range of standard new effective temperature in the cooling mode, which denotes a comfort range, is from about 25.8°C to about 27.5°C where both young people and old people feel comfortable.

The young people in the heating mode, who were Koreans, felt comfortable at a standard new effective temperature ranging from about 24.2°C to about 26.8°C, and the old people in the heating mode, who were Koreans, felt comfortable at a standard new effective temperature ranging from about 25.7°C to about 28.2°C. Thus, a range of standard new effective temperature in the heating mode, which denotes a comfort range, is from about 25.7°C to about 26.8°C where both young people and old people feel comfortable.

The range of relative humidity, defining the comfort range A in the cooling and heating modes, is a range where a human typically feels comfortable. The range of relative humidity and standard new effective temperature, defining the comfort range A in the cooling and heating modes, is just an example, and thus, it may vary according to conditions. The upper limit and/or the lower limit of relative humidity and standard new effective temperature, which define the comfort range A, may be input through the signal input 30.

Hereinafter, the lower limit of standard new effective temperature defining the comfort range A may be referred to as a comfort temperature lower limit SET*low, and the upper limit of standard new effective temperature defining the comfort range A may be referred to as a comfort temperature upper limit SET*high. In addition, the lower limit of relative humidity defining the comfort range A may be referred to as a comfort humidity lower limit R.H.low, and the upper limit of relative humidity defining the comfort range A may be referred to as a comfort humidity upper limit R.H.high.

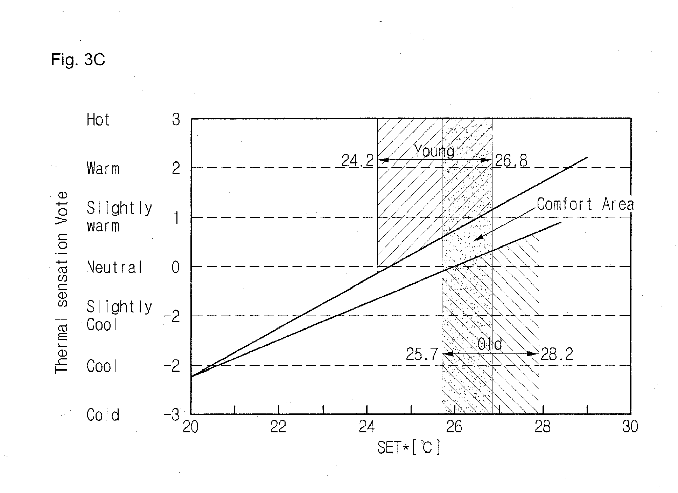

As shown in Fig. 3, the comfort range A may be defined by the following ranges:

COMFORT TEMPERATURE LOWER LIMIT ≤ INDOOR STANDARD NEW EFFECTIVE TEMPERATURE ≤COMFORT TEMPERATURE UPPER LIMIT

COMFORT HUMIDITY LOWER LIMIT ≤ INDOOR RELATIVE HUMIDITY ≤COMFORT HUMIDITY UPPER LIMIT

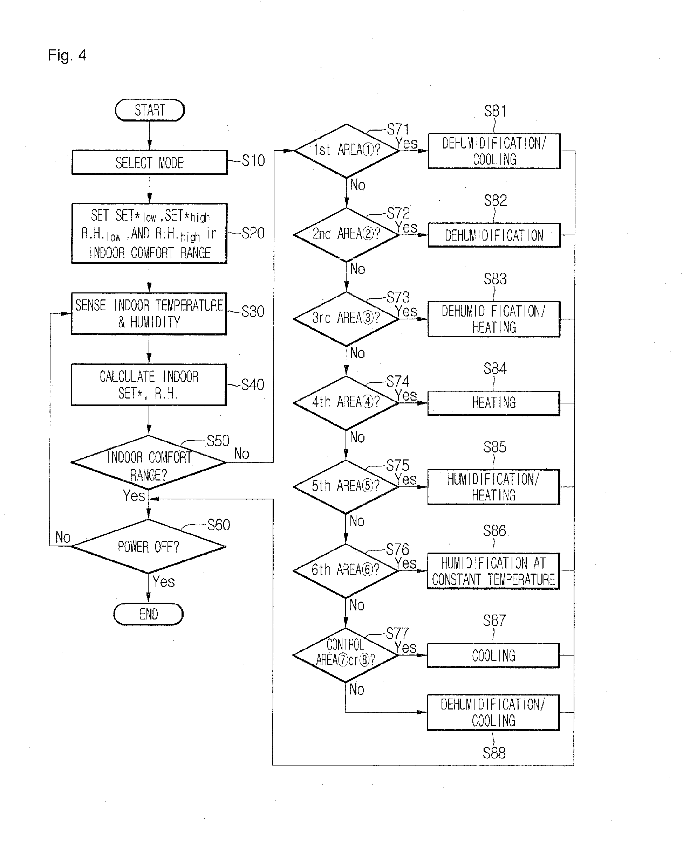

Fig. 4 is a flowchart of a comfort control operation method according to an embodiment. Referring to Fig. 4, in step S10, a user may select an operation mode of an air conditioner, such as the air conditioner 1 of Figs. 1-2, through a signal input, such as the signal input 30, of Figs. 1-2, to perform a comfort control operation.

The selected operation mode may be, for example, a cooling mode for decreasing indoor temperature in summer, or a heating mode for increasing indoor temperature in winter. When the operation mode is input, a controller, such as the controller 40 of Figs. 1-2, may set a range of standard new effective temperature (SET*) and a range of relative humidity, which may correspond to a comfort range, in step S20. The range of standard new effective temperature and the range of relative humidity may be set when the air conditioner is manufactured, or may be set by a user.

In step S30, a temperature sensor and a humidity sensor, such as the temperature sensor 10 and the humidity sensor 20 of Figs. 1-2, may sense a temperature and humidity of indoor air. In step S40, the sensed temperature and humidity may be used as variables by the controller, to calculate an indoor standard new effective temperature and an indoor relative humidity.

In step S50, the controller may determine whether the indoor standard new effective temperature and the indoor relative humidity are within the comfort range. When the indoor standard new effective temperature and the indoor relative humidity are out of the comfort range, the controller may determine in which area (of the graph of Fig. 3) the indoor standard new effective temperature and the indoor relative humidity are located in steps S71, S72, S73, S74, S75, S76, S77, or S77, and then, may perform the comfort control operation in steps S81, S82, S83, S84, S85, S86, S87, or S88, respectively. That is, an indoor device may be controlled to condition the indoor air to within the comfort range.

The comfort control operation may vary according to an area in which the indoor standard new effective temperature and the indoor relative humidity are located. The comfort control operation may be continually performed until the indoor standard new effective temperature and the indoor relative humidity reach the comfort range.

In more detail, when the indoor standard new effective temperature and the indoor relative humidity are within a first area of the graph of Fig. 3, the controller may control the air conditioner to dehumidify and cool an indoor space, in step S81. In the first area, the indoor standard new effective temperature and the indoor relative humidity are greater than the comfort temperature upper limit and the comfort humidity upper limit, respectively. Thus, the controller may control a four-way valve, such as the four-way valve 80 of Figs. 1-2, such that the air conditioner performs a cooling operation. In addition, the controller may control a compressor, such as the compressor 70 of Figs. 1-2, such that a surface temperature of the heat exchanger is lower than a dew point of the indoor air. Thus, moisture included in the indoor air may be collected through condensation on a surface of the heat exchanger, and thus, the indoor air may be dehumidified.

When the indoor standard new effective temperature and the indoor relative humidity are within a second area of the graph of Fig. 3, the controller may control the air conditioner to dehumidify the indoor space, in step S82. In the second area, the indoor relative humidity is greater than the comfort humidity upper limit. Thus, the controller may control the four-way valve and the compressor, such that the air conditioner performs the cooling operation with the surface temperature of the heat exchanger being lower than the dew point of the indoor air. After the dehumidifying, when the indoor standard new effective temperature is smaller than the comfort temperature lower limit, the controller may control the four-way valve and the compressor, such that the air conditioner performs a heating operation.

When the indoor standard new effective temperature and the indoor relative humidity are within a third area of the graph of Fig. 3, the controller may control the air conditioner to dehumidify and heat the indoor space, in step S83. In the third area, the indoor relative humidity is greater than the comfort humidity upper limit, and the indoor standard new effective temperature is smaller than the comfort temperature upper limit. Thus, the controller may control the four-way valve and the compressor, such that the air conditioner performs the heating operation. When the temperature of the indoor air increases, its relative humidity decreases. Thus, the indoor standard new effective temperature and the indoor relative humidity may reach the comfort range.

In addition, the controller may control the four-way valve and the compressor to heat the indoor space after the dehumidifying. When the indoor standard new effective temperature and the indoor relative humidity are within a fourth area of the graph of Fig. 3, the controller may control the air conditioner to heat the indoor space, in step S84. In the fourth area, the indoor standard new effective temperature is lower than the comfort temperature lower limit. Thus, the controller may control the four-way valve and the compressor, such that the air conditioner performs the heating operation. When the temperature of the indoor air increases, its relative humidity decreases. When the relative humidity of the indoor air is lower than the comfort humidity lower limit, the controller may control the humidifier to operate. That is, the humidifier may be controlled to operate, through a communication device, such as the communication device 50 of Figs. 1-2. When the humidifier operates to humidify the indoor air, the humidity of the indoor air increases.

When the indoor standard new effective temperature and the indoor relative humidity are within a fifth area of the graph of Fig. 3, the controller may control the air conditioner to humidify and heat the indoor space, in step S85. In the fifth area, the indoor standard new effective temperature and the indoor relative humidity are smaller than the comfort temperature lower limit and the comfort humidity lower limit, respectively. Thus, the controller may control the four-way valve and the compressor, such that the air conditioner performs the heating operation. In addition, the controller may use the communication device to control the humidifier to operate. The indoor air may be heated and humidified by the air conditioner and the humidifier.

When the indoor standard new effective temperature and the indoor relative humidity are within a sixth area of the graph of Fig. 3, the controller may control the air conditioner to humidify the indoor space, in step S86. In the sixth area, the indoor relative humidity is smaller than the comfort humidity lower limit. Thus, the controller may use the communication device to control the humidifier to operate. When the indoor air is humidified, the indoor standard new effective temperature may be lower than the comfort temperature lower limit. In this case, the controller may control the four-way valve and the compressor, such that the air conditioner performs the heating operation.

When the indoor standard new effective temperature and the indoor relative humidity are within a seventh area of the graph of Fig. 3, the controller may control the air conditioner to humidify and cool the indoor space, in step S87. In the seventh area, the indoor standard new effective temperature is higher than the comfort temperature upper limit, and the indoor relative humidity is lower than the comfort humidity lower limit. Thus, the controller may control the four-way valve and the compressor, such that the air conditioner performs the cooling operation. In addition, the controller may use the communication device to control the humidifier to operate. The indoor air may be cooled and humidified by the air conditioner and the humidifier.

When the indoor standard new effective temperature and the indoor relative humidity are within an eighth area of the graph of Fig. 3, the controller may control the air conditioner to cool the indoor space, in step S88. In the eighth area, the indoor standard new effective temperature is higher the comfort temperature upper limit. Thus, the controller may control the four-way valve, such that the air conditioner performs the cooling operation. When the temperature of the indoor air decreases, its relative humidity increases. When the relative humidity of the indoor air is higher than the comfort humidity upper limit, the controller may control the compressor, such that the surface temperature of the heat exchanger is lower than the dew point of the indoor air. Thus, moisture included in the indoor air may be collected through condensation on a surface of the heat exchanger, and thus, the indoor air dehumidified. In step S60, until a signal for turning the air conditioner off is input, steps S30 to S88 may be repeated.

According to this embodiment, indoor air may be conditioned at a standard new effective temperature and relative humidity at which a user feels comfortable. In addition, to set a range at which a user feels comfortable, humidity is considered, as well as the standard new effective temperature. Thus, user satisfaction may be improved.

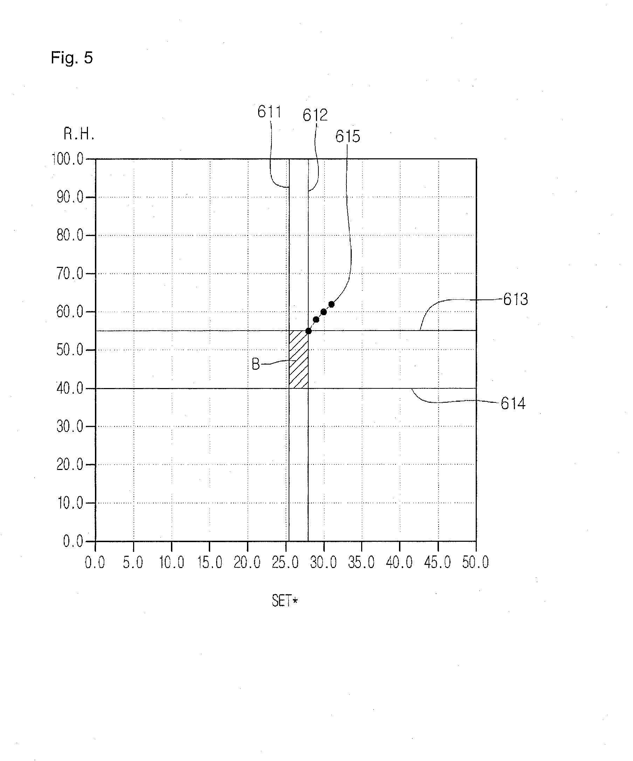

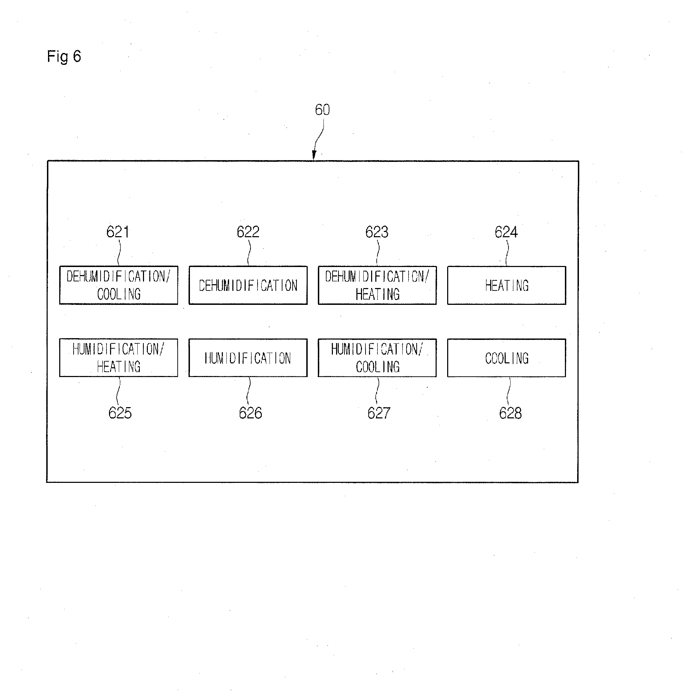

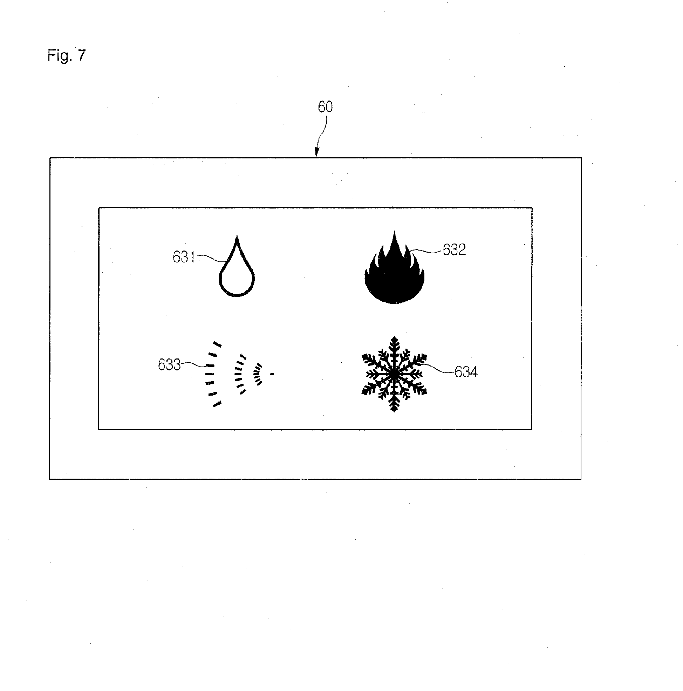

Fig. 5 is a schematic view illustrating a state of a comfort control operation on a display according to an embodiment. Fig. 6 is a schematic view illustrating a state of a comfort control operation on a display according to an embodiment. Fig. 7 is a schematic view illustrating a state of a comfort control operation on a display according to an embodiment.

A display, such as the display 60 of Fig. 2, which may be a display of the indoor unit or device, or a display of the remote control device, may display a state of a comfort control operation. Referring to Fig. 5, a comfort area according to standard new effective temperature and relative humidity may be formed on X-Y coordinates.

In more detail, a standard new effective temperature may be defined by one of an X-axis and a Y-axis, and a relative humidity may be defined by the other. The display may display a comfort temperature lower limit line 611 and a comfort temperature upper limit line 612. Further, the display may display a comfort humidity lower limit line 614 and a comfort humidity upper limit line 613. An area formed by the lines 611 to 614 may be defined as a comfort area B. The region surrounding the comfort area B may be divided into first to eighth areas, as illustrated in Fig. 3.

The display may display an indication point 615 that indicates a current indoor standard new effective temperature and a current indoor relative humidity. When the air conditioner performs the comfort control operation, the current indoor standard new effective temperature and the current indoor relative humidity may vary. Then, the indication point 615 moves with time on the display. Thus, a process in which an indoor standard new effective temperature and an indoor relative humidity move toward the comfort area B may be displayed to a user in real time during the comfort control operation. Hereinafter, a display configuration according to this embodiment may be referred to as a first display window.

Referring to Fig. 6, during a comfort control operation, the display may display information about a current operation state to change an indoor state to a comfort state. The information may be displayed in character form on different display areas of the display. The information in character form may denote operation conditions that correspond to the areas of the graph of Fig. 3, respectively. That is, the information may include dehumidification/cooling 621, dehumidification 622, dehumidification/heating 623, heating 624, humidification/heating 625, humidification 626, humidification/cooling 627, and cooling 628, each of which may be displayed in a separate area on the display.

In other words, when eight character information display sections are provided on the display, only the display section displaying a current operation state may be activated, and the others may be inactivated. For example, when a current indoor state corresponds to the first area of Fig. 3, the comfort control operation may be performed. At this point, only the dehumidification/cooling 621 may be activated and displayed on the display. Hereinafter, a display configuration according to this embodiment may be referred to as a second display window. According to this embodiment, character information corresponding to a current operation state may be displayed only in a single area, for example, only in a central area of the display.

Referring to Fig. 7, a current operation state may be displayed in icon form on the display. In more detail, the display may include a dehumidification icon 631, a heating icon 632, a humidification icon 633, and a cooling icon 634. In this case, at least one icon corresponding to a current operation state may be displayed. For example, when a dehumidification/cooling operation is performed, the dehumidification icon 631 and the cooling icon 634 may be simultaneously displayed. When a humidification/heating operation is performed, the heating icon 632 and the humidification icon 633 may be simultaneously displayed. When only a dehumidification operation is performed, only the dehumidification icon 631 may be displayed. Hereinafter, a display configuration according to this embodiment may be referred to as a third display window.

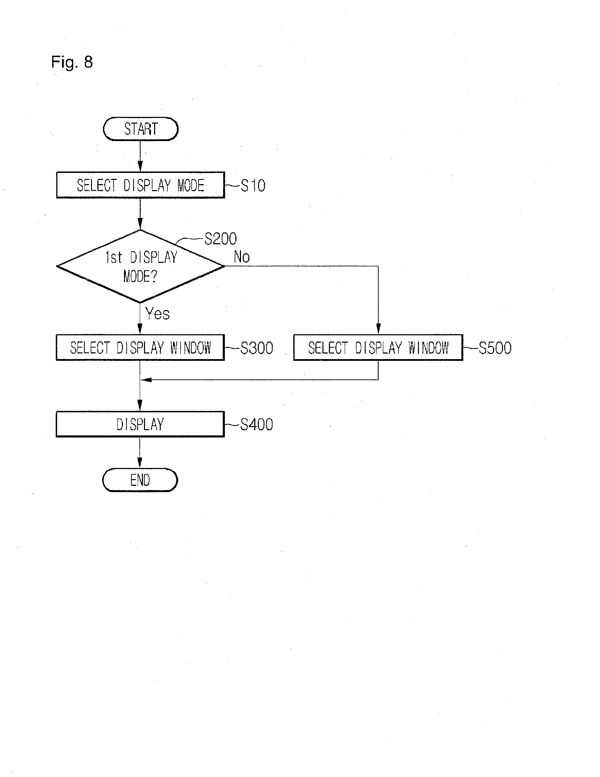

Fig. 8 is a flowchart of a method of selecting a screen displaying an operation state of an air conditioner, according to an embodiment. The display of the air conditioner may display one of the first to third display windows illustrated in Figs. 5 to 7, or may simultaneously display at least two thereof. Also, the display windows illustrated in Figs. 6 and 7 may be displayed on the display of the remote control device.

Hereinafter, a method of displaying a single display window on a display of an indoor unit may be defined as a first display mode, and a method of displaying a plurality of display windows on the display of the indoor unit may be defined as a second display mode.

Referring to Fig. 8, in step S100, a user may select a display mode through a signal input, such as the signal input 30 of Figs. 1-2. In step S200, a controller, such as the controller 40 of Figs. 1-2, may identify the selected display mode.

As described above, one of the first to third display windows may be selectively displayed in the first display mode. One of the second display window of Fig. 6 and the third display window of Fig. 7, and the first display window of Fig. 5 may be displayed in the second display mode.

When the first display mode is selected, one of the first to third display windows may be selected to be displayed on the display, in step S300. In step S400, the display window selected by the user may be displayed on the display.

When the second display mode is selected, one of the second and third display windows may be selected to be displayed together with the first display window on the display, in step S500. Then, the two selected display windows may be simultaneously displayed on the display.

According to this embodiment, because a comfort control operation state is displayed, a user may check an operation state of an air conditioner in real time. Thus, user satisfaction may be improved.

According to embodiments, because indoor air is conditioned at a standard new effective temperature and relative humidity, at which a user feels comfortable, user satisfaction may be improved.

In addition, as a comfort control operation state is displayed, a user may check an operation state of an air conditioner in real time.

Embodiments disclosed herein provide an air conditioner and a method of controlling an air conditioner, which may use a standard new effective temperature and a relative humidity to set a comfort range at which a user may feel comfortable, and may condition indoor air to within the comfort range.

Embodiments disclosed herein provide an air conditioner that may include a temperature sensor that senses a temperature of indoor air; a humidity sensor that senses a humidity of the indoor air; and a control part or controller that uses the sensed temperature and the sensed humidity to calculate an indoor standard new effective temperature and an indoor relative humidity, and perform a comfort control operation on the basis of a result of the calculation.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to effect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. An air conditioner, comprising:
a temperature sensor that senses a temperature of indoor air;
a humidity sensor that senses a humidity of the indoor air; and
a controller that uses the sensed temperature and humidity to calculate an indoor standard new effective temperature and an indoor relative humidity, and perform a comfort control operation based upon a result of the calculation.

2. The air conditioner according to claim 1, wherein the controller sets an upper limit and a lower limit of the indoor standard new effective temperature to define a comfort range.

3. The air conditioner according to claim 2, wherein at least one of the upper limit or the lower limit is set differently according to a cooling mode or a heating mode.

4. The air conditioner according to claim 2, wherein at least one of the upper limit or the lower limit is set by a user.

5. The air conditioner according to claim 2, wherein the controller sets an upper limit and a lower limit of relative humidity to define the comfort range.

6. The air conditioner according to claim 5, wherein at least one of the upper limit or the lower limit of the relative humidity is set differently according to a cooling mode or a heating mode.

7. The air conditioner according to claim 5, wherein at least one of the upper limit or the lower limit of the relative humidity is set by a user.

8. The air conditioner according to any one of claims 1 to 7, further comprising a communication device that transmits an on/off signal for a humidifier that humidifies an indoor space.

9. The air conditioner according to any one of claims 1 to 8, further comprising a display including a display window that displays a state of the comfort control operation.

10. The air conditioner according to claim 9, wherein the display window comprises a first display window displayed with x-y coordinates defining the standard new effective temperature and relative humidity, a comfort range formed by crossing upper and lower limit lines of the indoor standard new effective temperature and upper and lower limit lines of the relative humidity displayed in the X-Y coordinates, and a current indoor air state displayed as a point in the X-Y coordinates.

11. The air conditioner according to claim 10, wherein a movement of the point is displayed in real time during the comfort control operation.

12. The air conditioner according to claim 10 or 11, wherein the display window comprises a second display window in which a current operation state for comfort control is displayed in character form.

13. The air conditioner according to claim 12, wherein the display window comprises a third display window in which a current operation state for comfort control is displayed in icon form.

14. The air conditioner according to claim 10, further comprising:
a second display window in which a current operation state for comfort control is displayed in character form; and
a third display window in which a current operation state for comfort control is displayed in icon form, wherein at least one of the first display window, the second display window, or the third display window is selectively displayed.

15. The air conditioner according to claim 10, further comprising:
a second display window in which a current operation state for comfort control is displayed in character form; and
a third display window in which a current operation state for comfort control is displayed in icon form, wherein at least one of the second display window or the third display window is displayed together with the first display window.
